(19) Europäisches Patentamt
European Patent Office
Office européen des brevets

(11) **EP 2 515 568 A1**

(12) **EUROPEAN PATENT APPLICATION**
published in accordance with Art. 153(4) EPC

(43) Date of publication:
**24.10.2012 Bulletin 2012/43**

(51) Int Cl.:
**H04W 16/00** (2009.01)

(21) Application number: **09852469.7**

(22) Date of filing: **25.12.2009**

(86) International application number:
**PCT/CN2009/076093**

(87) International publication number:
**WO 2011/075919 (30.06.2011 Gazette 2011/26)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **ZTE Corporation**
**Shenzhen, Guangdong 518057 (CN)**

(72) Inventors:
• **LIU, Ling**
**Shenzhen**
**Guangdong 518057 (CN)**

• **ZHU, Zhengnan**
**Shenzhen**
**Guangdong 518057 (CN)**
• **ZHAO, Tao**
**Shenzhen**
**Guangdong 518057 (CN)**

(74) Representative: **Jansen, Cornelis Marinus et al**
**VEREENIGDE**
**Johan de Wittlaan 7**
**2517 JR Den Haag (NL)**

(54) **METHOD AND DEVICE FOR SHARING ABIS RESOURCES**

(57) The present disclosure discloses a method for sharing ABIS resources, comprising the steps that: a specific ABIS resource pool is set in the ABIS resources of the site, wherein the specific ABIS resource pool is dedicated for at least one operator supported by the site; a shared ABIS resource pool is set, wherein the shared ABIS resource pool is shared by all operators supported by the site; after receiving a resource allocation request of the service, the operator having the specific ABIS re-source pool allocates the resources in the shared ABIS resource pool for the service when the resources in the specific ABIS resource pool can not meet the resource requirement of the service. The present disclosure also discloses a device for sharing the ABIS resources. The present disclosure ensures that the operators have the independence of the resources, as well as uses the whole ABIS resources of the site as much as possible and ensures the efficient utilization of the ABIS resources.

Fig. 1

a specific ABIS resource pool is set in ABIS resources of a site, wherein the specific ABIS resource pool is dedicated for at least one operator supported by the site; a shared ABIS resource pool is set, wherein the shared ABIS resource pool is shared by all operators supported by the site — 101

after receiving a resource allocation request of the service, the operator having a specific ABIS resource pool allocates resources in the shared ABIS resource pool to a service when resources in the specific ABIS resource pool fail to meet a resource requirement of the service — 102

**Description**

**TECHNICAL FIELD**

The present disclosure relates to a technology of ABIS resource allocation, and in particular to a method and device for sharing ABIS resources among multiple operators.

**BACKGROUND**

At present, telecommunication operators' cooperation of network establishment becomes a popular mode, which realizes resource sharing and saves operation cost. Meanwhile, this mode also results in an operator losing pure independence; therefore, how to meet both the operation cost requirement and the independence of the operator becomes an important concern at present.

In Global System for Mobile Communication (GSM), an ABIS interface is used for describing a communication interface directly connected between a Base Station Controller (BSC) and a remote end of a Base Transceiver Station (BTS). A physical connection of the ABIS interface is generally an E1 or IP mode; for both the E1 access and the IP access, bandwidth resources of the ABIS interface are hard up. With only adding E1 lines or enhancing the configuration of network bandwidth to expand the bandwidth, the operation cost of the operator would increase. Therefore, how to better use ABIS resources becomes a concern of the operators.

The conventional ABIS resource allocation mode is a fixed configuration of wireless channels and ABIS resources, that is, the relationship between the wireless channels and the ABIS resources is fixed. When a service applies for resources, corresponding ABIS resources can be found only if wireless resources are configured, and this resource allocation mode is very simple to process. However, since a wireless packet service is introduced, in order to meet requirements of various encoding rates, one wireless channel corresponds to a plurality of ABIS channels. Due to the indeterminacy of the wireless packet service, the requirements for ABIS resources are dynamically changed. If a fixed configuration is performed according to the maximum ABIS bandwidth, the ABIS interface resources are wasted on some extent. Therefore, the fixed configuration mode has a great influence on the utilization efficiency of the ABIS resources.

Based on the above problems, a popular process mode is full dynamic ABIS resource allocation. That is, the wireless channels and the ABIS resources are no longer fixedly configured; however, the ABIS resource amount needed is calculated according to the type applied for by the service during the application process of the service, so as to realize dynamic allocation. This mode improves the utilization efficiency of the ABIS resources and saves the ABIS bandwidth on some extent.

On condition that multiple operators share a network, the configuration and allocation of ABIS resources have new requirements. Each operator not only requires the ABIS bandwidth to be used utmost but also expects to have its own dedicated ABIS resources, i.e., resource independence. Some primary operators expect that their own resource utilization can be guaranteed first. Thus, the full dynamic ABIS allocation can not meet the sharing requirement of multiple operators.

In the mode that multiple operators share a network, there has little research on how to reasonably use and allocate the ABIS resources. At present, there is no solution for the technical problem above.

**SUMMARY**

In view of the problem above, the main object of the present disclosure is to provide a method and device for sharing ABIS resources, guaranteeing that the operators have independence of resources and fully utilizing the ABIS resources.

In order to realize the object above, the technical scheme of the present disclosure is realized by:

A method for sharing ABIS resources includes:

a specific ABIS resource pool is set in ABIS resources of the site, wherein the specific ABIS resource pool is dedicated for at least one operator supported by the site; and a shared ABIS resource pool is set, wherein the shared ABIS resource pool is shared by all operators supported by the site; and

after receiving a resource allocation request of the service, the operator having a specific ABIS resource pool allocates resources in the shared ABIS resource pool to a service when resources in the specific ABIS resource pool fail to meet a resource requirement of the service.

Preferably, the specific ABIS resource pool may include a dedicated ABIS resource pool exclusive for one operator and a partially shared ABIS resource pool shared by some operators.

Preferably, the method may further include:

after the resource allocation request of the service is received, when the operator has more than two ABIS resource pools, resources are allocated to the service according to the following order: first resources in the dedicated ABIS resource pool, then resources in partially shared ABIS resource pool and last resources in the shared ABIS resource pool.

Preferably, the method may further include:

when the operator has more than two partially shared ABIS resource pools, an order of allocating resources is to the service according to the number of sharing operators and the resource amount in the ABIS resource pool.

Preferably, the method may further include:

a priority is set for all operators supported by the site, and a maximum proportion of resource that can be occupied by the service of the operator is set in the shared ABIS resource pool and the partially shared ABIS resource pool according to the priority.

Preferably, the service may include Circuit Switch (CS) service and Packet Switch (PS) service; wherein, a resource reservation amount is set for the CS service and the PS service respectively in the dedicated ABIS resource pool; or/and a resource reservation amount is set for the CS service and the PS service of the operator respectively in the shared ABIS resource pool and the partially shared ABIS resource pool; and wherein, a maximum proportion of resource that can be occupied by the PS service is set in the dedicated ABIS resource pool; or/and a maximum proportion of resource that can be occupied by the PS service of the operator is set respectively in the shared ABIS resource pool and the partially shared ABIS resource pool.

Preferably, the method may further include:

when the operator has more than two cells at the site, according to a current data service amount of a cell, a maximum proportion of resource that is occupied by each cell is dynamically calculated in the dedicated ABIS resource pool, or/and in the shared ABIS resource pool, or/and in the partially shared ABIS resource pool.

Preferably, calculating usable resource for the service in the dedicated ABIS resource pool may be:

for the CS service, the usable resource is a difference value between current idle ABIS resource and the resource reservation amount set for the PS service in the dedicated ABIS resource pool; and

for the PS service, the usable resource $PSUsable = (MIN(A \times PSThres, A - CSBusy)) \times D - CellPSBusy - CSRv - PSRv$, where $A$ is a sum of idle resource and occupied resource in the dedicated ABIS resource pool, PSThres is a maximum proportion of resource that can be occupied by the PS service in the dedicated ABIS resource pool, CSBusy is a resource amount currently occupied by the CS service in the dedicated ABIS resource pool, $D$ is a maximum proportion of resource that is occupied by the cell to which the PS service belongs in the dedicated ABIS resource pool, CellPSBusy is a resource amount currently occupied by the cell to which the PS service belongs in the dedicated ABIS resource pool, CSRv is a resource reservation amount set for the CS service in the dedicated ABIS resource pool, and PSRv is a resource reservation amount set for the PS service in the dedicated ABIS resource pool.

Preferably, calculating the usable resource for the service in the shared ABIS resource pool or the partially shared ABIS resource pool may be:

for the CS service, the usable resource $CSUsable = A \times P - PLMNBusy - PSRsv$; and

for the PS service, $PSUsable = (MIN(A \times P \times PSThres, A \times P - PLMNCSBusy)) \times D - CellPSBusy - CSRv - PSRv$, where $A$ is a sum of idle resource and occupied resource in the shared ABIS resource pool or the partially shared ABIS resource pool, $P$ is a maximum proportion of resource that can be occupied by the PS service of an operator in the shared ABIS resource pool or the partially shared ABIS resource pool, PLMNBusy is a resource amount occupied by the operator in the shared ABIS resource pool or the partially shared ABIS resource pool, PSRsv is a resource reservation amount set for the PS service of the operator in the shared ABIS resource pool or the partially shared ABIS resource pool, PSThres is a maximum proportion of resource that can be occupied by the PS service of the operator in the shared ABIS resource pool or the partially shared ABIS resource pool, PLMNCSBusy is a resource amount occupied by the CS service of the operator in the shared ABIS resource pool or the partially shared ABIS resource pool, D is a maximum proportion of resource that is occupied by the cell to which the PS service belongs in the shared ABIS resource pool or the partially shared ABIS resource pool, CellPSBusy is a resource amount currently occupied by the cell to which the PS service belongs in the shared ABIS resource pool or the partially shared ABIS resource pool, CSRv is a resource reservation amount set for the CS service of the operator in the shared ABIS resource pool or the partially shared ABIS resource pool, and PSRv is a resource reservation amount set for the PS service of the operator in the shared ABIS resource pool or the partially shared ABIS resource pool.

A device for sharing ABIS resources includes a setting unit, a receiving unit, and a resource allocation unit, wherein

the setting unit is used for setting a specific ABIS resource pool that is dedicated for at least one operator supported by a site, and setting a shared ABIS resource pool that is shared by all operators supported by the site;
the receiving unit is used for receiving a resource allocation request of the service; and
the resource allocation unit is used for allocating resources in the shared ABIS resource pool to a service when resources in a specific ABIS resource pool of an operator fail to meet a resource requirement of the service.

Preferably, the specific ABIS resource pool may include a dedicated ABIS resource pool exclusive for one operator and a partially shared ABIS resource pool shared by some operators.

Preferably, the resource allocation unit is used for allocating resources to the service according to the following order: first resources in the dedicated ABIS resource pool, then resources in partially shared ABIS resource pool and last resources in the shared ABIS resource pool, when the operator has more than two ABIS resource pools.

Preferably, when the operator has more than two partially shared ABIS resource pools, the setting unit may set an order of allocating resource to the service according to a number of sharing operators and a resource amount in the ABIS resource pool.

Preferably, the setting unit is further used for setting a priority for more than two operators, and setting a maximum proportion of resource that can be occupied by a service of each operator in the shared ABIS resource pool according to the priority.

Preferably, the service may include CS service and PS service;

the setting unit is further used for setting a resource reservation amount for the CS service and the PS service respectively in the dedicated ABIS resource pool; or/and setting a resource reservation amount for the CS service and the PS service of each operator respectively in the shared ABIS resource pool; and

the setting unit is further used for setting a maximum proportion of resource that can be occupied for the PS service in the dedicated ABIS resource pool; or/and setting a maximum proportion of resource that can be occupied by the PS service of each operator respectively in the shared ABIS resource pool.

Preferably, the device may further include:

when the operator has more than two cells at the site, according to a current data service amount of a cell, a calculating unit is used for dynamically calculating a maximum proportion of resource that is occupied by each cell in the dedicated ABIS resource pool, or/and in the shared ABIS resource pool.

Preferably, the usable resource for the service in the dedicated ABIS resource pool calculated by the resource allocation unit may be:

for the CS service, the usable resource is a difference value between current idle ABIS resource and the resource reservation amount set for the PS service in the dedicated ABIS resource pool; and

for the PS service, the usable resource $PSUsable = (MIN(A \times PSThres, A - CSBusy)) \times D - CellPSBusy - CSRv - PSRv$, where A is a sum of idle resource and occupied resource in the dedicated ABIS resource pool, PSThres is a maximum proportion of resource that can be occupied by the PS service in the dedicated ABIS resource pool, CSBusy is a resource amount currently occupied by the CS service in the dedicated ABIS resource pool, D is a maximum proportion of resource that is occupied by the cell to which the PS service belongs in the dedicated ABIS resource pool, CellPSBusy is a resource amount currently occupied by the cell to which the PS service belongs in the dedicated ABIS resource pool, CSRv is a resource reservation amount set for the CS service in the dedicated ABIS resource pool, and PSRv is a resource reservation amount set for the PS service in the dedicated ABIS resource pool.

Preferably, usable resource for the service in the shared ABIS resource pool or the partially shared ABIS resource pool calculated by the resource allocation unit may be:

for the CS service, the usable resource CSUsable = A×P - PLMNBusy - PSRsv;

for the PS service, PSUsable = (MIN(A×P×PSThres, A×P - PLMNCSBusy)) ×D - CellPSBusy - CSRv - PSRv, where A is a sum of idle resource and occupied resource in the shared ABIS resource pool or the partially shared ABIS resource pool, P is a maximum proportion of resource that can be occupied by the PS service of an operator in the shared ABIS resource pool or the partially shared ABIS resource pool, PLMNBusy is a resource amount occupied by the operator in the shared ABIS resource pool or the partially shared ABIS resource pool, PSRsv is a resource reservation amount set for the PS service of the operator in the shared ABIS resource pool or the partially shared ABIS resource pool, PSThres is a maximum proportion of resource that can be occupied by the PS service of the operator in the shared ABIS resource pool or the partially shared ABIS resource pool, PLMNCSBusy is a resource amount occupied by the CS service of the operator in the shared ABIS resource pool or the partially shared ABIS resource pool, D is a maximum proportion of resource that is occupied by the cell to which the PS service belongs in the shared ABIS resource pool or the partially shared ABIS resource pool, CellPSBusy is a resource amount currently occupied by the cell to which the PS service belongs in the shared ABIS resource pool or the partially shared ABIS resource pool, CSRv is a resource reservation amount set for the CS service of the operator in the shared ABIS resource pool or the partially shared ABIS resource pool, and PSRv is a resource reservation amount set for the PS service of the operator in the shared ABIS resource pool or the partially shared ABIS resource pool.

In the present disclosure, among ABIS resources of the site, a dedicated ABIS resource pool is set for an operator and a shared ABIS resource pool shared by each operator is set. After receiving a service request, resources are allocated first in the dedicated ABIS resource pool of the operator according to the type of the service and the operator to which the service belongs. When the usable resource in the dedicated ABIS resource pool fail to meet the resource requirement of the service, resources are allocated to the service in the shared ABIS resource pool. The present disclosure ensures that the operators have the independence of the resources, as well as uses the whole ABIS resources of the site as much as possible and ensures the efficient utilization of the ABIS resources.

## BRIEF DESCRIPTION OF THE DRAWINGS

Fig. 1 shows a flowchart of a method for sharing ABIS resources according to the present disclosure;

Fig. 2 shows a diagram of corresponding relationship between dedicated ABIS resource pools and operators according to the present disclosure;

Fig. 3 shows a diagram of corresponding relationship between cells and ABIS resource pools according to the present disclosure;

Fig. 4 shows a diagram of usable ABIS resources for the CS service in ABIS resource pools according to the present disclosure;

Fig. 5 shows a diagram of usable ABIS resources for the PS service in ABIS resource pools according to the present disclosure;

Fig. 6 shows a diagram of a structure of the device for sharing ABIS resources according to the present disclosure; and

Fig. 7 shows a diagram of another structure of the device for sharing ABIS resources according to the present disclosure.

## DETAILED DESCRIPTION

The basic idea of the present disclosure is that: resources of operators are segmented by configuring dedicated ABIS resource pools and shared ABIS resource pools, and shared ABIS resources are reserved to serve each operator. Both the shared resource pools and the dedicated resource pools can be shared by a plurality of cells so as to achieve maximum utilization of resources. During the resource allocation process, for the cell which has a dedicated resource pool, resources in the dedicated resource pools are used first, then resources in the shared resource pools can be used after the ABIS resources in the dedicated resource pools are used up. For the cell which has no dedicated resource pool, only resources in the shared resource pools can be used.

For a better understanding of the purpose, the technical scheme and the advantages of the present disclosure, embodiments are provided below to further illustrate the present disclosure in detail by reference to the accompanying drawings.

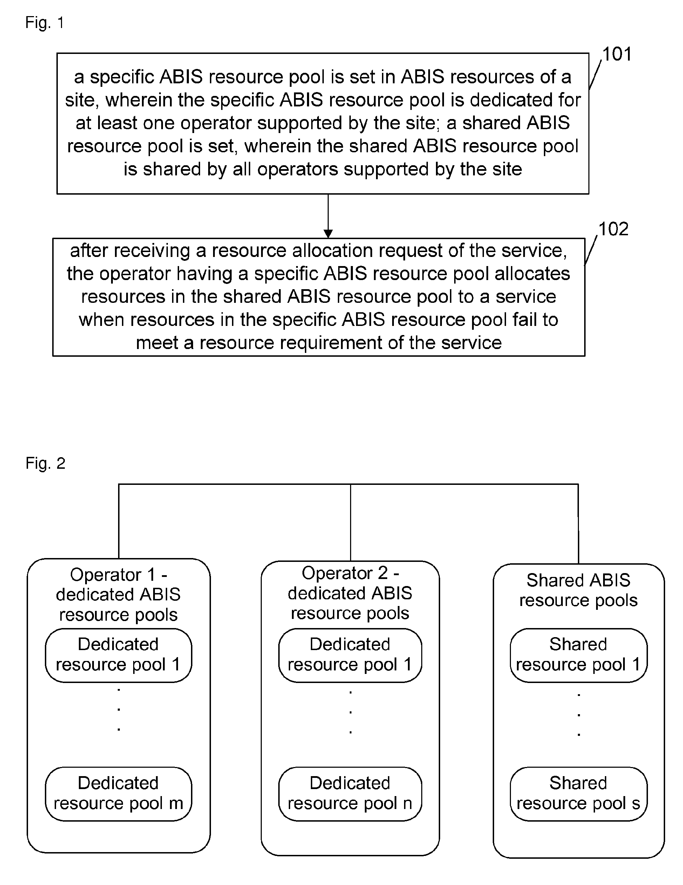

Fig. 1 shows a flowchart of a method for sharing ABIS resources according to the present disclosure. As shown in Fig. 1, the method for sharing ABIS resources according to the present disclosure comprises the following steps:

Step 101: a specific ABIS resource pool is set in ABIS resources of a site, wherein the specific ABIS resource pool is dedicated for at least one operator supported by the site; and a shared ABIS resource pool is set, wherein the shared ABIS resource pool is shared by all operators supported by the site.

In Step 101, the specific ABIS resource pool is a dedicated ABIS resource pool exclusive for at least one operator or a partially shared ABIS resource pool shared by some operators.

Specifically, provided that the site supports four operators, a shared ABIS resource pool may be set for two of the operators, that is, a partially shared ABIS resource pool is formed; then a shared ABIS resource pool shared by the four operators is set. Alternatively, multiple partially shared ABIS resource pools may be set for any two of the four operators, then a shared ABIS resource pool shared by all four operators is set. In addition, it is best to set dedicated ABIS resource pools for some of the operators supported by the site, wherein a dedicated ABIS resource pool is a ABIS resource pool dedicated for an operator.

When there are more than two ABIS resource pools to which a operator belongs, a resource allocation priority (i.e., resource allocation order) is set for the ABIS resource pools to which the operator belongs, wherein the resource allocation priority of the dedicated ABIS resource pool is the highest, the priority of the partially shared ABIS resource pool is lower than that of the dedicated ABIS resource pool, and the priority of the shared ABIS resource pool is lower than that of the partially shared ABIS resource pool. Furthermore, the resource allocation priority of partially shared ABIS resource pools is determined according to a number of the sharing operators and the sizes of the resource pools. Specifically, the less the number of the sharing operators of a partially shared ABIS resource pool is, the higher the priority of the partially shared ABIS resource pool is; when the number of sharing operators is the same, the resource allocation priority is determined according to the amount of resources in shared ABIS resource pools, the more the resources are in a resource pool, the higher the priority of the resource pool is.

The technical scheme of the present disclosure is illustrated below in detail in conjunction with specific examples. The present disclosure takes the condition that both a dedicated ABIS resource pool and a shared ABIS resource pool are set for example. If shared ABIS resource pools exist only, resources are allocated according to the priority of shared ABIS resource pools in the example, and further description thereof is omitted here.

The ABIS resources for interfacing the BTS with the BSC are described by a resource pool. For E1 access, the basic unit in the resource pool is a timeslot of 16k on E1 lines; while for IP access, what described in a resource pool is an accessed bandwidth resource.

In the present disclosure, ABIS resources are allocated to the operators supported by the site; that is, a dedicated ABIS resource is set for each operator. Meanwhile, a shared ABIS resource also can be set for each operator. A preferred mode is to set a dedicated ABIS resource for each operator, or set a dedicated ABIS resource for an operator having higher priority and a shared ABIS resource for an operator having lower priority according to the priority of operators. In order to meet the requirement that multiple operators share the ABIS resources, it is necessary to configure the operator attribute of the ABIS resource pool, that is, add Mobile Country Code (MCC) identifier or Mobile Network Code (MNC) identifier to the resource pool, to indicate for which operator the resource pool is dedicated. The resource pool configured with a valid operator identifier refers to a dedicated ABIS resource pool, wherein the ABIS resources in the dedicated resource pool can only serve the operator. The resource pool for which no operator is specified refers to a shared ABIS resource pool, wherein an MCC identifier and an MNC identifier in the shared ABIS resource pool can be configured as an invalid value (for example, 65535), the shared resource pool can serve all cells of operators supported by the site.

Fig. 2 shows a diagram of corresponding relationship between dedicated ABIS resource pools and operators according to the present disclosure. As shown in Fig. 2, as a plurality of resource pools are configured in the site, m dedicated resource pools are configured for Operator 1, n dedicated resource pools are configured for Operator 2, and s shared resource pools are configured. In actual environment, resource pools can be configured according to the allocation condition of the cells of the site. Fig. 2 is only illustrative but not limiting the ABIS resource setting mode of the present disclosure. Furthermore, a shared ABIS resource pool shown in the diagram can be a partially shared ABIS resource pool.

In the present disclosure, after dedicated ABIS resource pools and shared ABIS resource pools are introduced, it is also necessary to set the maximum proportion of resource that can be occupied in the ABIS resource pool according to a priority of the operators. When the priority is configured for all the operators supported by the site, grades of the priority can be divided into three levels, namely, high level, middle level and low level. For the operators with different levels, the proportion of resources occupied in a shared resource pool is different. Those skilled in the art should understand that a priority level of an operator is set according to actual needs, wherein the priority can be divided into different levels. A maximum proportion of a shared ABIS resource pool that the operators with different levels can use is also configured according to actual needs. Here, the sum of the maximum proportion values that the operators can occupy in a shared ABIS resource pool can be greater than 1, so as to meet the requirement of priority level of each operator and the requirement of first-in-first-out of resource preemption.

In the present disclosure, main services in the communication system are Circuit Switch (CS) and Packet Switch (PS). After dedicated ABIS resource pools and shared ABIS resource pools are configured for each operator supported by the site, it is also necessary to set a resource reservation amount for CS and PS respectively in dedicated ABIS resource pools; or/and, set a resource reservation amount for CS and PS of each operator respectively in shared ABIS resource pools. Here, setting the resource reservation amount of a service is to prevent the resources in the resource pool being exhausted by a service, thus prevent the system from overloaded and prevent the entire service quality from degrading. The resource reservation amount above is an empiric value, which is set by each operator according to actual service operation condition. The present disclosure is not limited to any specific setting scope of the resource reservation amount. Those skilled in the art should understand that the resource reservation amount is easy to set, and any specific value is omitted here.

In a dedicated ABIS resource pool, a maximum proportion of resource that can be occupied by PS is set; or/and in a shared ABIS resource pool or/and a partially shared ABIS resource pool, a maximum proportion of resource that can be occupied by PS is set for each operator respectively. Those skilled in the art should understand that the proportion value above is an empiric value too, which is set according to the actual operation environment. The proportion value above is easy to set.

The present disclosure further comprises calculating a maximum proportion of resource usage for the cells of each operator at the site to prevent a certain cell from exhausting dedicated ABIS resources configured by the operator, thus avoiding the influence on the service access of other cells. Specifically, when an operator has more than two cells at the site, it is necessary to calculate the number of carrier frequency and the type of carrier frequency at each cell periodically and determine whether a cell is a hotspot cell and a maximum usage proportion that the current cell can occupy, so as to set the maximum proportion of resource that each cell occupies in dedicated ABIS resource pools or/and shared ABIS resource pools. The proportion value is easy to calculate, and thus the specific setting detail and specific value are omitted here.

In the present disclosure, ABIS resources in ABIS resource pools are configured in a unit of 64K timeslot. When the BSC uses the ABIS resource pools, it is necessary to maintain with 16K timeslot as a unit. Therefore, both the queue maintenance and the maintenance of local data region are performed in a unit of 16K timeslot. Detailed illustration is provided below.

According to the status of ABIS interface, an idle queue, a block queue and an occupied queue of ABIS resources are established, wherein unused ABIS resources with normal status are queued into the idle queue, ABIS resources with fault status are queued into the block queue and ABIS resources being used are queued into the occupied queue. When the status of an ABIS resource changes, the ABIS resource thereof needs to be adjusted among the three queues. For example, when an ABIS resource in the idle queue is blocked, the ABIS resource is moved from the idle queue to the block queue; when an idle queue is occupied, the idle queue is moved to the occupied queue. After status queues of ABIS resources are established, when the ABIS resources are allocated, the ABIS resources can be sorted quickly, thus it is convenient to calculate the ABIS resources and allocate the subsequent resources.

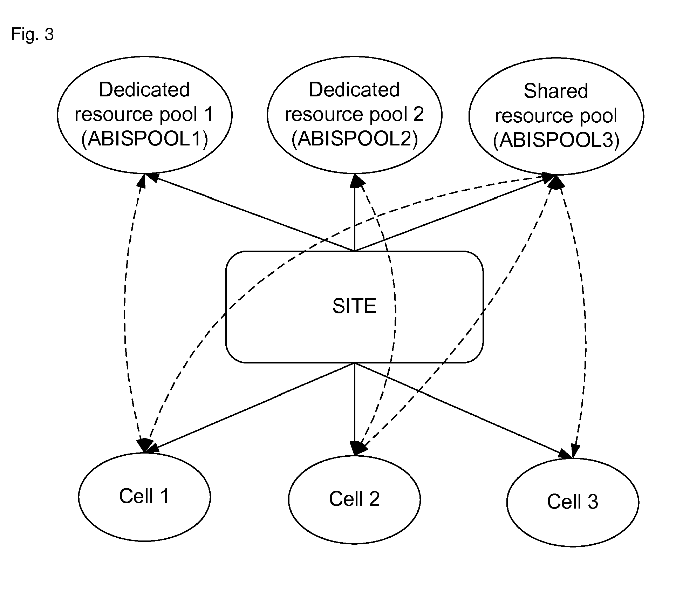

In the present disclosure, in view that the ABIS resources in the cells are dynamically selected, in order to quickly find the ABIS resources that the cells can use during application process of a service channel, it is necessary to establish a local data region of ABIS resource pools corresponding to the cells. That is, a corresponding relationship between the cells and local resources of the ABIS resources is established. Fig. 3 shows a diagram of the corresponding relationship between cells and ABIS resource pools according to the present disclosure. As shown in Fig. 3, the SITE is configured with three ABIS resource pools, wherein ABISPOOL1 is a dedicated resource pool of Operator 1, ABISPOOL2 is a dedicated resource pool of Operator 2, and ABISPOOL3 is a shared resource pool. The SITE is configured with three logic cells, wherein Cell1 belongs to Operator 1, Cell2 belongs to Operator 2, and Cell3 belongs to Operator 3. According to the usage rules of ABIS resources described above, Cell1 can use the resources of ABISPOOL1 and ABISPOOL3, Cell2 can use the resources of ABISPOOL2 and ABISPOOL3, and Cell3 can use the resources of ABISPOOL3. Therefore, a corresponding relationship of local data region of Cells to resource pools is as follows:

Cell1: {ABISPOOL1, ABISPOOL3}

Cell2: {ABISPOOL2, ABISPOOL3}

Cel13: {ABISPOOL3}

A corresponding relationship of local data region of resource pools to Cells is as follows:

ABISPOOL1: {Cell1}

ABISPOOL2: {Cell2}

ABISPOOL3: {Cell1, Cell2, Cell3}

After the local data region of Cells to resource pools is established, a usable ABIS resource pool can be found directly according to cells in the site; and after the local data region of resource pools to Cells is established, a cell can be found directly according to resource pools being used by the cell.

The specific application of partially shared ABIS resource pools is totally the same as that of shared ABIS resource pools.

In this way, during the application process of a service channel, the ABIS resources that the cell can use can be quickly calculated.

Step 102: after receiving a resource allocation request of the service, the operator having a specific ABIS resource pool allocates resources in the shared ABIS resource pool to a service when resources in the specific ABIS resource pool fail to meet a resource requirement of the service.

In Step 102, the rules to allocate resources are: after the resource allocation request of the service is received, when the operator has more than two ABIS resource pools, resources are allocated to the service according to the following order: first resources in the dedicated ABIS resource pool, then resources in partially shared ABIS resource pool, and last resources in the shared ABIS resource pool. When the operator has more than two partially shared ABIS resource pools, a resource allocation order is set to the service according to the number of sharing operators and the resource amount in the ABIS resource pool.

The usable resource for the service in the dedicated ABIS resource pool is calculated as follows:

for the CS service, the usable resource is a difference value between current idle ABIS resource and the resource reservation amount set for the PS service in the dedicated ABIS resource pool; and

for the PS service, the usable resource $PSUsable = (MIN(A \times PSThres, A - CSBusy)) \times D - CellPSBusy - CSRv - PSRv$, where A is a sum of idle resource and occupied resource in the dedicated ABIS resource pool, PSThres is a maximum proportion of resource that can be occupied by the PS service in the dedicated ABIS resource pool, CSBusy is a resource amount currently occupied by the CS service in the dedicated ABIS resource pool, D is a maximum proportion of resource that is occupied by the cell to which the PS service belongs in the dedicated ABIS resource pool, CellPSBusy is a resource amount currently occupied by the cell to which the PS service belongs in the dedicated ABIS resource pool, CSRv is a resource reservation amount set for the CS service in the dedicated ABIS resource pool, and PSRv is a resource reservation amount set for the PS in the dedicated ABIS resource pool.

When usable resource of the service in the shared ABIS resource pool or the partially shared ABIS resource pool is calculated, the calculating mode is the same with that in the specific ABIS resource pool:

for the CS service, the usable resource $CSUsable = A \times P - PLMNBusy - PSRsv$; and

for the PS service, $PSUsable = (MIN(A \times P \times PSThres, A \times P - PLMNCSBusy)) \times D - CellPSBusy - CSRv - PSRv$, where A is a sum of idle resource and occupied resource in the shared ABIS resource pool or the partially shared ABIS resource pool, P is a maximum proportion of resource that can be occupied by the PS service of an operator in the shared ABIS resource pool or the partially shared ABIS resource pool, PLMNBusy is a resource amount occupied by the operator in the shared ABIS resource pool or the partially shared ABIS resource pool, PSRsv is a resource reservation amount set for the PS service of the operator in the shared ABIS resource pool or the partially shared ABIS resource pool, PSThres is a maximum proportion of resource that can be occupied by the PS service of the operator in the shared ABIS resource pool or the partially shared ABIS resource pool, PLMNCSBusy is a resource amount occupied by the CS service of the operator in the shared ABIS resource pool or the partially shared ABIS resource pool, D is a maximum proportion of resource that is occupied by the cell to which the PS service belongs in the shared ABIS resource pool or the partially shared ABIS resource pool, CellPSBusy is a resource amount currently occupied by the cell to which the PS service belongs in the shared ABIS resource pool or the partially shared ABIS resource pool, CSRv is a resource reservation amount set for the CS service of the operator in the shared ABIS resource pool or the partially shared ABIS resource pool, and PSRv is a resource reservation amount set for the PS service of the operator in the shared ABIS resource pool or the partially shared ABIS resource pool.

The essence of the resource allocation of the present disclosure is described below by taking the operators and the set ABIS resource pools for example, as shown in Fig. 3.

For different service types, usages of ABIS resources are different. Therefore, calculations of usable ABIS resources are different. The calculations of usable ABIS resources for the CS service and the PS service are illustrated below. Firstly, a plurality of parameters is defined:

As used herein, "CS resource reservation amount (CSRv)" refers to a total of the resource reservation amount of all cells, wherein a certain ABIS resource amount is reserved for each cell to guarantee normal operation of CS service. CSRv also can be considered as a total of the ABIS resource amount reserved for CS service of all operators.

As used herein, "PS resource reservation amount (PSRv)" refers to a number of ABIS resources that at least the PS service can use.

As used herein, "PS usable threshold (PSThres)" refers to a maximum proportion of ABIS resources that the PS can use in a resource pool. PSThres is used for preventing the exhaustion of ABIS resources due to unlimited PS expansion.

As used herein, "operator priority" is used for distinguishing total maximum occupation proportions of different operators in shared ABIS resource pools. According to the priority level, a maximum occupation proportion value P in a shared resource pool is calculated, wherein a sum of P values of all operators calculated according to the priority level can be greater than 100%.

For the CS service, the calculation of usable ABIS resources is as follows:

For the CS service, the calculation mode of ABIS resources that the current service can use in a dedicated ABIS resource pool is different from that in a shared ABIS resource pool.

For the CS service in the dedicated resource pool, according to the corresponding relationship of local data region of Cells to resource pools, the dedicated resource pools that the cell can use are found. Idle ABIS resources in all resource pools are calculated and accumulated. Then, according to the corresponding relationship of local data region of resource pools to Cells, all cells that can use the resource pools are calculated, whether the PS resource reservation amount is configured is determined, and total PS resource reservation amounts that need to be reserved are then calculated. Finally, it is calculated that the usable ABIS resource amount in dedicated resource pools is equal to "idle ABIS resources minus PS resource reservation amounts." If idle resources in dedicated resource pools can not meet the requirement of PS reservation, then the usable resources of this service in the dedicated resource pools are 0.

For the CS service in the share resource pool, the calculation of the usable ABIS resources is as follows: according to the corresponding relationship of local data region of Cells to resource pools, shared resource pools that the cell can use are found. Usable ABIS resources A (including resources in the idle queue and resources in the occupied queue) in all shared resource pools are calculated. According to configured priority of an operator, a threshold P of ABIS resources that the operator can occupy is calculated. Then, a maximum ABIS resource amount that can be used in shared resource pools by the cell to which this service belongs and the corresponding operator are calculated. The ABIS resources occupied by the operator PLMNBusy are calculated, and ABIS resources needing to be reserved for the PS (PSRsv) in shared resource pools are calculated. Therefore, the calculation formula of CS usable resource (CSUsable) in shared resource pools is as follows:

$$CSUsable = A \times P - PLMNBusy - PSRsv$$

Usable ABIS resources of this CS service is a sum of calculation result in dedicated resource pools and that in shared resource pools.

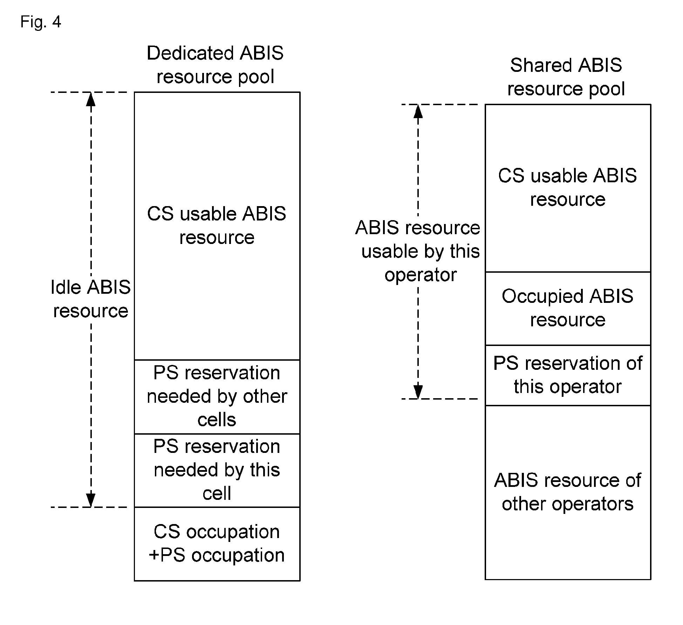

Fig. 4 shows a diagram of usable ABIS resources for the CS service in ABIS resource pools according to the present disclosure. As shown in Fig. 4, the left half of Fig. 4 shows a calculation of the CS usable ABIS in a dedicated ABIS resource pool. It can be seen that a part of resources in the resource pool is occupied by CS service and PS service, and the rest ABIS resources are idle resource. In the idle resources, it is necessary to subtract PS reservation for this cell and other cells, and the rest resources are usable ABIS resources of this CS service application.

The right half of Fig. 4 shows a calculation of the CS usable ABIS resource in a shared ABIS resource pool. It can be seen that calculation of the CS usable resource in the shared ABIS resource pool takes priority level of an operator into account. the usable ABIS resource of this service application is equal to "maximum proportion that the operator can use minus occupied ABIS resource and PS resource reservation amount."

For the PS service, the calculation of usable ABIS resources is as follows:

For the PS service, the usable ABIS resources of the current service application are calculated in each one of resource pools respectively. First, usable resources A (including resources in the idle queue and resources in the occupied queue) in each of the resource pools are calculated, the CS service occupation condition (CSBusy) in resource pools and the PS occupation condition of the cell which applies for service currently (CellPSBusy) are calculated. In order to prevent exhaustion of resources due to fast expansion of the PS service, a proportion threshold that the PS service can use (PSThres) is set, wherein the maximum proportion that the PS service can use in a resource pool can not exceed the threshold. Since an ABIS resource pool would be used by a plurality of cells, it is needed to consider the maximum limit D (a ratio) that each cell can use in the resource pool, wherein the limit D is determined based on the number of carrier frequency, the type of carrier frequency in the cell, and whether the cell is a hotspot cell. For a dedicated resource pool, only the cells of the same operator use the dedicated resource pool. PS resource reservation amount (PSRv) and CS resource reservation amount (CSRv) are the sum of that of each cell respectively. PSRv and CSRv are preferably reserved in the dedicated resource pool, and are reserved in the shared resource pool when resources in the dedicated resource pool are in shortage. For a shared resource pool, PSRv and CSRv not only have to meet the reservation of the cells having a dedicated resource pool but also the reservation of the cells only having a shared resource pool, thus comprehensive consideration is needed. For the shared ABIS resource pool, it is also needed to consider the priority level of the operator. The maximum threshold P of the ABIS resource that the operator can occupy is calculated to allocate the maximum portion that the operator can use in the resource pool.

Therefore, for the dedicated resource pool, the calculation formula of the usable resources of this service application is as follows:

$$PSUsable = (MIN(A \times PSThres, A - CSBusy)) \times D - CellPSBusy - CSRv - PSRv$$

For the shared resource pool, it is necessary to calculate ABIS resources occupied by the CS service of the operator of this application in the shared resource pool (PLMNCSBusy), the occupation condition of the current cell PS service in the shared resource pool (CellPSBusy), and CSRv PSRv needed by the cell of the operator in the shared resource pool. after the parameters above are obtained, the calculation formula of usable resources of this service application is as follows:

$$PSUsable = (MIN(A \times P \times PSThres, A \times P - PLMNCSBusy)) \times D - CellPSBusy - CSRv - PSRv$$

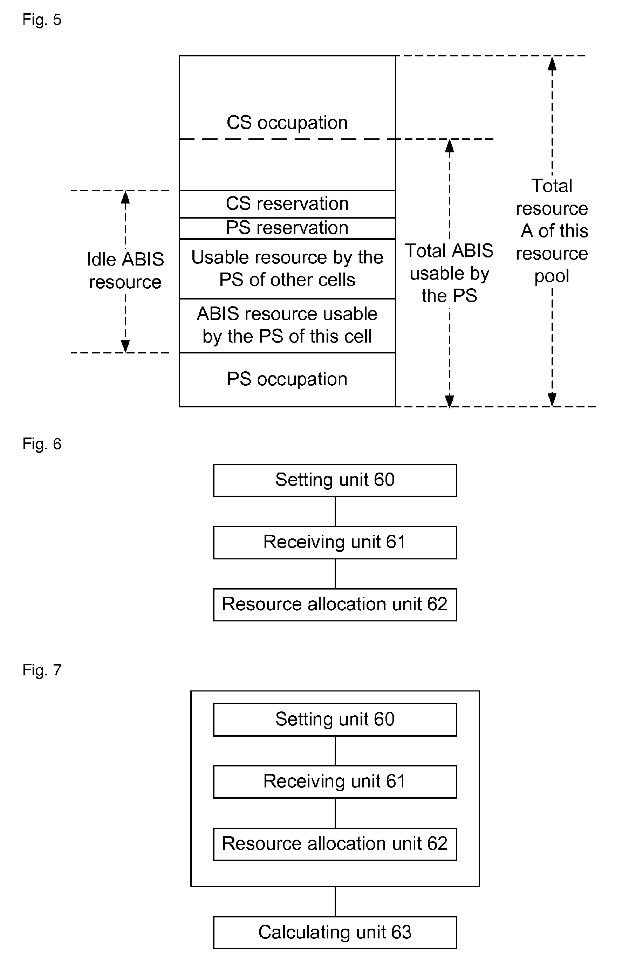

Fig. 5 shows a diagram of usable ABIS resources for the PS service in ABIS resource pools according to the present disclosure. As shown in Fig. 5, it is a typical example of the calculation of PS usable resources in a resource pool. The usable resources for the PS service are influenced by the PS usable threshold (PSThres), the CS service occupation, CSRv, PSRv and the dynamic usable ratio of the cell in the resource pool. In Fig. 5, the CS service occupies a relatively great proportion, thus the proportion of the PS usable service is lower than the PS usable threshold and the usable resources of the PS service becomes less. Meanwhile, since the cell using the resource pool is configured with CS reservation and PS reservation, it is necessary to subtract the CS reservation and the PS reservation.

From the calculation above, it can be seen that the usable ABIS resources of the service application are distinguished between the dedicated resource pool and the shared resource pool, wherein for resources in the shared resource pool, balance is made among all operators. Since the resource pools are shared by a plurality of cells, balance of resources is guaranteed for each cell by dynamically calculating limitation of the cells.

According to the calculation above, the usable ABIS resources in the resource pool are obtained. The usable resources in all resource pools are first sorted in a descending order, and then sorted according to dedicated/shared attribute of the resource pools, wherein a dedicated resource pool is prior to a shared resource pool. During the sorting process, the priority of the resource pools is also considered. In this way, a cell having a dedicated resource pool is guaranteed to use the resources in the dedicated resource pool first.

According to the sorted ABIS resource pools, usable resources are found in the idle queue of the resource pools and then allocated. If idle resources in the first resource pool cannot satisfy this allocation, idle resources in the second resource pool are continuously allocated, and idle resources in the third and etc. The ABIS resources already allocated are queued into an occupied queue.

When a service is terminated, corresponding ABIS resources need to be released. If it is a CS service release, corresponding ABIS resources are released immediately. If it is a PS service release, ABIS resources are released after a delay when a wireless channel is released and in consideration of uncertainty of the PS service. In this way, before the release of ABIS resources, a new PS service application does not need to reallocate ABIS resources, thereby improving access efficiency of service.

No matter what kind of service the ABIS resources are released for, it is necessary to release the ABIS resources from a corresponding occupied queue and add to an idle queue, so as to return the ABIS resources to corresponding resource pools for the follow-up allocation.

The present disclosure can configure dedicated ABIS resources for each operator and configure rest ABIS resources into shared resource pools. Since resources in each shared resource pool are shared by a plurality of cells and dynamically allocated, the present disclosure meets the requirement of ABIS bandwidth segmentation in the condition of multiple operators, and the dynamic allocation rules also improve the utilization rate of ABIS resources.

Fig. 6 shows a diagram of a structure of the device for sharing ABIS resources according to the present disclosure. As shown in Fig. 6, the device for sharing ABIS resources according to the present disclosure comprises a setting unit 60, a receiving unit 61 and a resource allocation unit 62. The setting unit 60 is used for setting a specific ABIS resource pool that is dedicated for at least one operator supported by a site, and setting a shared ABIS resource pool that is shared by all operators supported by the site; the receiving unit 61 is used for receiving a resource allocation request of a service; and the resource allocation unit 62 is used for allocating resources in the shared ABIS resource pool to a service when resources in a specific ABIS resource pool of an operator fail to meet a resource requirement of the service. The specific ABIS resource pool is a dedicated ABIS resource pool exclusive for one operator or a partially shared ABIS resource pool shared by some operators.

When the operator has more than two ABIS resource pools, the resource allocation unit 62 allocates resources to the service according to the following order: first resources in the dedicated ABIS resource pool, then resources in partially shared ABIS resource pool and last resources in the shared ABIS resource pool.

When the operator has more than two partially shared ABIS resource pools, the setting unit 60 sets an order of allocating resource to the service according to a number of sharing operators and a resource amount in the ABIS resource pool.

The setting unit 60 is further used for setting a priority for more than two operators, and setting a maximum proportion of resource that can be occupied by a service of each operator in the shared ABIS resource pool according to the priority. The service includes CS service and PS service. The setting unit is further used for setting a resource reservation amount for the CS service and the PS service respectively in the dedicated ABIS resource pool; or/and setting a resource reservation amount for the CS service and the PS service of each operator respectively in the shared ABIS resource pool.

Fig. 7 shows a diagram of another structure of the device for sharing ABIS resources according to the present disclosure. As shown in Fig. 7, based on the structure shown in Fig. 6, the device for sharing ABIS resources further comprises a calculating unit 63 which is used, when the operator has more than two cells at the site, according to the current data service amount of the cell, for dynamically calculating a maximum proportion of resources that each cell occupies in the dedicated ABIS resource pool or/and the shared ABIS resource pool.

The resource allocation unit 62 calculates the usable resources for the service in the dedicated ABIS resource pool as follows:

for the CS service, available resource is a difference value between current idle ABIS resource and the resource reservation amount set for the PS in the dedicated ABIS resource pool; and

for the PS service, the usable resource $PSUsable = (MIN(A \times PSThres, A - CSBusy)) \times D - CellPSBusy - CSRv - PSRv$, where $A$ is a sum of idle resource and occupied resource in the dedicated ABIS resource pool, $PSThres$ is a maximum proportion of resource that can be occupied by the PS service in the dedicated ABIS resource pool, $CSBusy$ is a resource amount currently occupied by the CS service in the dedicated ABIS resource pool, $D$ is a maximum proportion of resource that is occupied by the cell to which the PS service belongs in the dedicated ABIS resource pool, $CellPSBusy$ is a resource amount currently occupied by the cell to which the PS service belongs in the dedicated ABIS resource pool, $CSRv$ is a resource reservation amount set for the CS service in the dedicated ABIS resource pool, and $PSRv$ is a resource reservation amount set for the PS service in the dedicated ABIS resource pool.

The resource allocation unit 62 calculates the usable resource for the service in the shared ABIS resource pool or the partially shared ABIS resource pool as follows:

for the CS service, the usable resource $CSUsable = A \times P - PLMNBusy - PSRsv$; and

for the PS service, PSUsable = (MIN(A×P×PSThres, A×P - PLMNCSBusy)) ×D - CellPSBusy - CSRv - PSRv, where A is a sum of idle resource and occupied resource in the shared ABIS resource pool or the partially shared ABIS resource pool, P is a maximum proportion of resource that can be occupied by the PS service of an operator in the shared ABIS resource pool or the partially shared ABIS resource pool, PLMNBusy is a resource amount occupied by the operator in the shared ABIS resource pool or the partially shared ABIS resource pool, PSRsv is a resource reservation amount set for the PS service of the operator in the shared ABIS resource pool or the partially shared ABIS resource pool, PSThres is a maximum proportion of resource that can be occupied by the PS service of the operator in the shared ABIS resource pool or the partially shared ABIS resource pool, PLMNCSBusy is a resource amount occupied by the CS service of the operator in the shared ABIS resource pool or the partially shared ABIS resource pool, D is a maximum proportion of resource that is occupied by the cell to which the PS service belongs in the shared ABIS resource pool or the partially shared ABIS resource pool, CellPSBusy is a resource amount currently occupied by the cell to which the PS service belongs in the shared ABIS resource pool or the partially shared ABIS resource pool, CSRv is a resource reservation amount set for the CS service of the operator in the shared ABIS resource pool or the partially shared ABIS resource pool, and PSRv is a resource reservation amount set for the PS service of the operator in the shared ABIS resource pool or the partially shared ABIS resource pool.

Those skilled in the art should understand that the device for sharing ABIS resources as shown in Fig. 6 and Fig. 7 are designed for implementing the method for sharing ABIS resources above. The function of each processing unit included in the device shown in Fig. 6 and Fig. 7 can be understood by reference to the related description in the method for sharing ABIS resources above. The function of each processing unit can be implemented by a program running on a processor, also can be implemented by a specific logic circuit.

The above is only preferred embodiments of the present disclosure and not intended to limit the protection scope of the present disclosure.

**Claims**

1. A method for sharing ABIS resources, comprising:

   setting a specific ABIS resource pool in ABIS resources of a site, wherein the specific ABIS resource pool is dedicated for at least one operator supported by the site;
   setting a shared ABIS resource pool, wherein the shared ABIS resource pool is shared by all operators supported by the site; and
   allocating, by an operator having a specific ABIS resource pool, resources in the shared ABIS resource pool to a service when resources in the specific ABIS resource pool fail to meet a resource requirement of the service, after receiving a resource allocation request of the service.

2. The method according to claim 1, wherein the specific ABIS resource pool includes a dedicated ABIS resource pool exclusive for one operator and a partially shared ABIS resource pool shared by some operators.

3. The method according to claim 2, further comprising:

   allocating resources to the service according to the following order: first resources in the dedicated ABIS resource pool, then resources in partially shared ABIS resource pool and last resources in the shared ABIS resource pool, when the operator has more than two ABIS resource pools, after the resource allocation request of the service is received.

4. The method according to claim 3, further comprising:

   setting an order of allocating resources to the service according to a number of sharing operators and a resource amount in the ABIS resource pool, when the operator has more than two partially shared ABIS resource pools.

5. The method according to any of claims 2 to 4, further comprising:

   setting a priority for all operators supported by the site; and
   setting a maximum proportion of resource that can be occupied by a service of an operator in the shared ABIS resource pool and the partially shared ABIS resource pool according to the priority.

**6.** The method according to claim 5, wherein the service includes Circuit Switch (CS) service and Packet Switch (PS) service;

wherein, a resource reservation amount is set for the CS service and the PS service respectively in the dedicated ABIS resource pool; or/and a resource reservation amount is set for the CS service and the PS service of the operator respectively in the shared ABIS resource pool and the partially shared ABIS resource pool; and

wherein, a maximum proportion of resource that can be occupied by the PS service is set in the dedicated ABIS resource pool; or/and a maximum proportion of resource that can be occupied by the PS service of the operator is set in the shared ABIS resource pool and the partially shared ABIS resource pool.

**7.** The method according to claim 6, further comprising:

dynamically calculating, according to a current data service amount of a cell, a maximum proportion of resource that is occupied by each cell in the dedicated ABIS resource pool, or/and in the shared ABIS resource pool, or/and in the partially shared ABIS resource pool, when the operator has more than two cells at the site.

**8.** The method according to claim 7, wherein calculated usable resource for the service in the dedicated ABIS resource pool is:

for the CS service, a difference value between current idle ABIS resource and the resource reservation amount set for the PS service in the dedicated ABIS resource pool; and

for the PS service, PSUsable = (MIN(A$\times$PSThres, A - CSBusy)) $\times$D - CellPSBusy - CSRv - PSRv, where A is a sum of idle resource and occupied resource in the dedicated ABIS resource pool, PSThres is a maximum proportion of resource that can be occupied by the PS service in the dedicated ABIS resource pool, CSBusy is a resource amount currently occupied by the CS service in the dedicated ABIS resource pool, D is a maximum proportion of resource that is occupied by the cell to which the PS service belongs in the dedicated ABIS resource pool, CellPSBusy is a resource amount currently occupied by the cell to which the PS service belongs in the dedicated ABIS resource pool, CSRv is a resource reservation amount set for the CS service in the dedicated ABIS resource pool, and PSRv is a resource reservation amount set for the PS service in the dedicated ABIS resource pool.

**9.** The method according to claim 7, wherein calculated usable resource for the service in the shared ABIS resource pool or the partially shared ABIS resource pool is:

for the CS service, CSUsable = A$\times$ P - PLMNBusy - PSRsv; and

for the PS service, PSUsable = (MIN(A$\times$P$\times$PSThres, A$\times$P - PLMNCSBusy)) $\times$D - CellPSBusy - CSRv - PSRv, where A is a sum of idle resource and occupied resource in the shared ABIS resource pool or the partially shared ABIS resource pool, P is a maximum proportion of resource that can be occupied by the PS service of an operator in the shared ABIS resource pool or the partially shared ABIS resource pool, PLMNBusy is a resource amount occupied by the operator in the shared ABIS resource pool or the partially shared ABIS resource pool, PSRsv is a resource reservation amount set for the PS service of the operator in the shared ABIS resource pool or the partially shared ABIS resource pool, PSThres is a maximum proportion of resource that can be occupied by the PS service of the operator in the shared ABIS resource pool or the partially shared ABIS resource pool, PLMNCSBusy is a resource amount occupied by the CS service of the operator in the shared ABIS resource pool or the partially shared ABIS resource pool, D is a maximum proportion of resource that is occupied by the cell to which the PS service belongs in the shared ABIS resource pool or the partially shared ABIS resource pool, CellPSBusy is a resource amount currently occupied by the cell to which the PS service belongs in the shared ABIS resource pool or the partially shared ABIS resource pool, CSRv is a resource reservation amount set for the CS service of the operator in the shared ABIS resource pool or the partially shared ABIS resource pool, and PSRv is a resource reservation amount set for the PS service of the operator in the shared ABIS resource pool or the partially shared ABIS resource pool.

**10.** A device for sharing ABIS resources, comprising a setting unit, a receiving unit, and a resource allocation unit, wherein:

the setting unit is configured to set a specific ABIS resource pool that is dedicated for at least one operator supported by a site, and set a shared ABIS resource pool that is shared by all operators supported by the site;

the receiving unit is configured to receive a resource allocation request of a service; and

the resource allocation unit is configured to allocate resources in the shared ABIS resource pool to a service when resources in a specific ABIS resource pool of an operator fail to meet a resource requirement of the service.

11. The device according to claim 10, wherein the specific ABIS resource pool includes a dedicated ABIS resource pool exclusive for one operator and a partially shared ABIS resource pool shared by some operators.

12. The device according to claim 11, wherein the resource allocation unit is configured to allocate resources to the service according to the following order: first resources in the dedicated ABIS resource pool, then resources in partially shared ABIS resource pool and last resources in the shared ABIS resource pool, when the operator has more than two ABIS resource pools.

13. The device according to claim 12, wherein the setting unit is configured to set an order of allocating resource to the service according to a number of sharing operators and a resource amount in the ABIS resource pool, when the operator has more than two partially shared ABIS resource pools.

14. The device according to any of claims 11 to 13, wherein the setting unit is further configured to set a priority for more than two operators and set a maximum proportion of resource that can be occupied by a service of each operator in the shared ABIS resource pool according to the priority.

15. The device according to claim 14, wherein the service includes Circuit Switch (CS) service and Packet Switch (PS) service;
the setting unit is further configured to:

   set a resource reservation amount for the CS service and the PS service respectively in the dedicated ABIS resource pool; or/and
   set a resource reservation amount for the CS service and the PS service of each operator respectively in the shared ABIS resource pool; and
   the setting unit is further configured to:

   set a maximum proportion of resource that can be occupied by the PS service in the dedicated ABIS resource pool; or/and
   set a maximum proportion of resource that can be occupied by the PS service of each operator in the shared ABIS resource pool.

16. The device according to claim 15, further comprising:

   a calculating unit is configured to dynamically calculate, according to a current data service amount of a cell, a maximum proportion of resource that is occupied by each cell in the dedicated ABIS resource pool, or/and in the shared ABIS resource pool, when the operator has more than two cells at the site.

17. The device according to claim 16, wherein usable resource for the service in the dedicated ABIS resource pool calculated by the resource allocation unit is:

   for the CS service, a difference value between current idle ABIS resource and the resource reservation amount set for the PS service in the dedicated ABIS resource pool; and
   for the PS service, $PSUsable = (MIN(A \times PSThres, A - CSBusy)) \times D - CellPSBusy - CSRv - PSRv$, where A is a sum of idle resource and occupied resource in the dedicated ABIS resource pool, PSThres is a maximum proportion of resource that can be occupied by the PS service in the dedicated ABIS resource pool, CSBusy is a resource amount currently occupied by the CS service in the dedicated ABIS resource pool, D is a maximum proportion of resource that is occupied by the cell to which the PS service belongs in the dedicated ABIS resource pool, CellPSBusy is a resource amount currently occupied by the cell to which the PS service belongs in the dedicated ABIS resource pool, CSRv is a resource reservation amount set for the CS service in the dedicated ABIS resource pool, and PSRv is a resource reservation amount set for the PS service in the dedicated ABIS resource pool.

18. The device according to claim 16, wherein usable resource for the service in the shared ABIS resource pool or the partially shared ABIS resource pool calculated by the resource allocation unit is:

   for the CS service, $CSUsable = A \times P - PLMNBusy - PSRsv$; and
   for the PS service, $PSUsable = (MIN(A \times P \times PSThres, A \times P - PLMNCSBusy)) \times D - CellPSBusy - CSRv - PSRv$, where A is a sum of idle resource and occupied resource in the shared ABIS resource pool or the partially shared ABIS resource pool, P is a maximum proportion of resource that can be occupied by the PS service of an operator in the shared ABIS resource pool or the partially shared ABIS resource pool, PLMNBusy is a resource amount occupied by the operator in the shared ABIS resource pool or the partially shared ABIS resource pool, PSRsv is a resource reservation amount set for the PS service of the operator in the shared ABIS resource pool or the partially shared ABIS resource pool, PSThres is a maximum proportion of resource that can be occupied by the PS service of the operator in the shared ABIS resource pool or the partially shared ABIS resource pool, PLMNCSBusy is a resource amount occupied by the CS service of the operator in the shared ABIS resource pool or the partially shared ABIS resource pool, D is a maximum proportion of resource that is occupied by the cell to which the PS service belongs in the shared ABIS resource pool or the partially shared ABIS resource pool, CellPSBusy is a resource amount currently occupied by the cell to which the PS service belongs in the shared ABIS resource pool or the partially shared ABIS resource pool, CSRv is a resource reservation amount set for the CS service of the operator in the shared ABIS resource pool or the partially shared ABIS resource pool, and PSRv is a resource reservation amount set for the PS service of the operator in the shared ABIS resource pool or the partially shared ABIS resource pool.

Fig. 1

101

a specific ABIS resource pool is set in ABIS resources of a site, wherein the specific ABIS resource pool is dedicated for at least one operator supported by the site; a shared ABIS resource pool is set, wherein the shared ABIS resource pool is shared by all operators supported by the site

102

after receiving a resource allocation request of the service, the operator having a specific ABIS resource pool allocates resources in the shared ABIS resource pool to a service when resources in the specific ABIS resource pool fail to meet a resource requirement of the service

Fig. 2

| Operator 1 - dedicated ABIS resource pools | Operator 2 - dedicated ABIS resource pools | Shared ABIS resource pools |
|---|---|---|
| Dedicated resource pool 1 | Dedicated resource pool 1 | Shared resource pool 1 |
| . . . | . . . | . . . |
| Dedicated resource pool m | Dedicated resource pool n | Shared resource pool s |

Fig. 3

Fig. 4

Dedicated ABIS
resource pool

Shared ABIS
resource pool

| CS usable ABIS resource |
| --- |
| PS reservation needed by other cells |
| PS reservation needed by this cell |
| CS occupation +PS occupation |

Idle ABIS resource

| CS usable ABIS resource |
| --- |
| Occupied ABIS resource |
| PS reservation of this operator |
| ABIS resource of other operators |

ABIS resource
usable by this
operator

Fig. 5

Fig. 6

Fig. 7

# INTERNATIONAL SEARCH REPORT

International application No.

PCT/CN2009/076093

### A. CLASSIFICATION OF SUBJECT MATTER

H04W16/00 (2009.01) i

According to International Patent Classification (IPC) or to both national classification and IPC

### B. FIELDS SEARCHED

Minimum documentation searched (classification system followed by classification symbols)

IPC: H04W16/-, H04Q7/-

Documentation searched other than minimum documentation to the extent that such documents are included in the fields searched

Electronic data base consulted during the international search (name of data base and, where practicable, search terms used)

CPRS, CNKI, WPI, EPODOC: ABIS, shar+, resource, distribut+, assign+, allocat+, dedicated, priority

### C. DOCUMENTS CONSIDERED TO BE RELEVANT

| Category* | Citation of document, with indication, where appropriate, of the relevant passages | Relevant to claim No. |
|---|---|---|
| | WO2006069470A1(ZTE CORP et al.) 06 Jul.2006 (06.07.2006) | |
| X | description: line 9 of page 3 to line 20 of page 4 | 1, 10 |
| A | the whole document | 2-9, 11-18 |
| A | CN101009873A (ALCATEL SHANGHAI BELL CO LTD) 01 Aug.2007(01.08.2007) | 1-18 |
| | the whole document | |
| A | CN101202602A (ZTE CORP) 18 Jun.2008 (18.06.2008) | 1-18 |
| | the whole document | |
| A | WO0070890A1(NOKIA NETWORKS OY et al.) 23 Nov.2000 (23.11.2000) | 1-18 |
| | the whole document | |

☐ Further documents are listed in the continuation of Box C.　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim (S) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
|---|---|
| 14 Sep.2010 (14.09.2010) | **23 Sep. 2010 (23.09.2010)** |

| Name and mailing address of the ISA/CN | Authorized officer |
|---|---|
| The State Intellectual Property Office, the P.R.China<br>6 Xitucheng Rd., Jimen Bridge, Haidian District, Beijing, China 100088<br>Facsimile No. 86-10-62019451 | ZHAO,Xiaoqing<br>Telephone No. (86-10)010-62411426 |

Form PCT/ISA /210 (second sheet) (July 2009)

## INTERNATIONAL SEARCH REPORT
Information on patent family members

| | International application No. |
|---|---|
| | PCT/CN2009/076093 |

| Patent Documents referred in the Report | Publication Date | Patent Family | Publication Date |
|---|---|---|---|
| WO2006069470A1 | 06.07.2006 | CN101044767A | 26.09.2007 |
| | | CN100525480C | 05.08.2009 |
| | | BRPI0419252A | 18.12.2007 |
| | | HK1101313A | 31.12.2009 |
| CN101009873A | 01.08.2007 | EP1814340A | 01.08.2007 |
| | | CN100508634C | 01.07.2009 |
| | | US2007177543A | 02.08.2007 |
| CN101202602A | 18.06.2008 | NONE | |
| WO0070890A1 | 23.11.2000 | FI991118A | 18.11.2000 |
| | | AU4572300A | 05.12.2000 |

Form PCT/ISA /210 (patent family annex) (July 2009)